# EUROPÄISCHE PATENTSCHRIFT

(11) **EP 1 006 288 B1**
(45) Veröffentlichungstag und Bekanntmachung des Hinweises auf die Patenterteilung: **21.07.2004**
(21) Anmeldenummer: 99123732.2
(22) Anmeldetag: 30.11.1999
(51) Int. Cl.: F16C 33/46, B61F 15/12

(54) **Radsatzlager**
Bearing for a wheel set
Palier pour un jeu de roues

(30) Priorität: 02.12.1998 DE 19855539
(43) Veröffentlichungstag der Anmeldung: 07.06.2000
(73) Patentinhaber: INA-Schaeffler KG, 91074 Herzogenaurach (DE)
(72) Erfinder: Becker, Klaus, Dipl.-Ing., 91074 Herzogenaurach (DE); Braun, Berthold, Dipl.-Ing., 91315 Höchstadt/Aisch (DE)

(56) Entgegenhaltungen:
- EP-A- 0 342 247
- DE-A- 4 142 313
- DE-A- 4 244 091
- DE-B- 1 185 867
- FR-A- 1 372 755
- US-A- 4 428 628

## Beschreibung

### Anwendungsgebiet der Erfindung

Die Erfindung betrifft ein Radsatzlager für Schienenfahrzeuge, bestehend aus zwei nebeneinander angeordneten in Käfigen geführten Zylinderrollen, die auf zugehörigen Laufbahnen eines inneren und eines äußeren Laufringes abwälzen, wobei das Radsatzlager einen Mittelbord und Außenborde aufweist.

### Hintergrund der Erfindung

Ein derartiges Radsatzlager ist aus der Deutschen Industrienorm DIN 5569 vorbekannt. Es besteht aus zwei nebeneinander angeordneten Zylinderrollenlagern mit massiven Außen- und Innenringen. Die beiden Außenringe sind beidseitig mit je einem radial nach innen weisenden Außenbord versehen, so daß beim Aneinanderliegen der beiden Zylinderrollenlager durch die innenliegenden Borde ein Mittelbord gebildet ist. Die zugehörigen Innenringe der Zylinderrollenlager sind an ihren gegenüberliegenden äußeren Seiten mit je einem Bord bzw. mit einer Anlaufscheibe versehen.

Dieser Vorveröffentlichung ist weiter entnehmbar, daß die Wälzkörper in Käfigen aus Metall bzw. aus Kunststoff untergebracht sind. Bei einem derartigen Käfiglager z. B. beansprucht der Käfig ca. 15 bis 35 % des Raumes zwischen Innen- und Außenring. Die theoretisch mögliche hundertprozentige Tragzahlausnutzung durch die Wälzkörper, wie sie vom vollrolligen Zylinderrollenlager erreicht wird, wird hierdurch auf ca. 85 bis 65 % reduziert. Auch reduziert sich die relative nominelle Lagerlebensdauer gegenüber einem vollrolligen Wälzlager auf ca. 58 bis 24 %. Bei einem vollrolligen Lager hingegen wird durch die hohe Leistungsdichte mehr Wärme produziert, dessen Grenzdrehzahl wird deshalb auf ca. 50 % gegenüber einem Käfiglager reduziert.

### Zusammenfassung der Erfindung

Es ist daher Aufgabe der Erfindung, ein gattungsgemäßes Radsatzlager mit Käfig unter Vermeidung der bisherigen Nachteile so weiterzuentwickeln, daß es eine hohe Tragfähigkeit erreicht und eine sehr hohe Drehzahl ermöglicht.

Erfindungsgemäß wird diese Aufgabe nach dem kennzeichnenden Teil von Anspruch 1 dadurch gelöst, daß die Käfige als einstückige Scheibenkäfige ausgebildet sind, die in einer Ringnut des inneren oder des äußeren Laufringes frei drehbar geführt sind und an ihrem äußeren oder inneren Durchmesser mehrere, über den gesamten Umfang verteilt angeordnete, Zylinderrollen aufnehmende Taschen aufweisen, wobei der innere oder der äußere Laufring gesprengt ist und durch Halteelemente nach dem Einsetzen der Käfige zusammengehalten ist.

Nun sind zwar derartige Scheibenkäfige bereits bekannt und werden beispielsweise in der gattungsgemässen DE 42 44 091 A1 ausführlich beschrieben. Der Fachmann kann dieser Vorveröffentlichung jedoch keinerlei Hinweis darauf entnehmen, einen solchen Scheibenkäfig in ein gattungsgemäßes Radsatzlager zu integrieren. In vorteilhafter Weise werden derartige Scheibenkäfige in einer Nut des Außenringes eingesetzt, wobei der Außenring zur Montageerleichterung dann in gesprengter Form ausgeführt ist. Der Käfiginnendurchmesser ist bis unter die Teilkreislinie heruntergezogen. Hierdurch wird eine Wälzkörperhalterung erreicht, d. h. der Innenring kann getrennt montiert werden. Zum äußeren Durchmesser hin sitzen die Scheibenkäfige mittig in einer im Außenring eingebrachten Nut. Durch die besondere Formgebung der Käfigtaschen entstehen zwischen den Wälzkörpern optimal geformte Stege, welche auftretende tangentiale Wälzkörperkräfte in sicherer Weise nach außen in den geschlossenen Ring leiten. Diese besondere Formgebung erlaubt im Gegensatz zu herkömmlichen teueren Massivkäfigen die Minimierung der Stegbreite.

Kerbspannungen, wie sie an den Steganbindungen der Massivkäfige auftreten, sind beim Scheibenkäfig nicht vorhanden. Der Steg erfüllt also in optimaler Weise seine eigentliche Funktion der Wälzkörpertrennung. Hierdurch ist es gelungen, eine weitaus größere Anzahl von Wälzkörpern, wie dies bei herkömmlichen Massivkäfigen der Fall ist, in das Wälzlager zu integrieren. Die Führung der Wälzkörper erfolgt in bekannter Weise zwischen den Borden. Die zwischen den Borden am Wälzkörper mit einem genau definierten, tangentialen Kraftangriffspunkt ausgeführten, mittig angreifenden Scheibenkäfige, üben außerhalb der Lastzone keine Zwangsmomente auf die Wälzkörper um ihre Hochachse aus und führen die Wälzkörper somit mit einer wesentlichen höheren Drehzahl, als das bei konventionellen Käfiglagem der Fall ist, der Lastzone zu. Hierdurch wird ein wesentlich geringeres Wälzkörperbeschleunigungsmoment erreicht, was wiederum weniger Reibmoment und Wärme im Lager erzeugt. Aufgrund der geringeren Wärmeerzeugung dieser Scheibenkäfiglager lassen sich somit wesentlich höhere Grenzdrehzahlen bei normaler Präzision erreichen.

Die vorzugsweise in der Außenringnut geführten Käfige stellen aufgrund ihrer Schmiegung optimale Gleitlager dar, welche bereits bei geringen Drehzahlen radial eine vollkommene Festkörpertrennung erreichen und somit als hydrodynamische Gleitlager laufen. Hierdurch geht der Anteil der Käfigreibung im Außenring nahezu gegen Null.

Im Zusammenhang mit Radsatzlagem für Schienenfahrzeuge ist neben der niedrigen Lauftemperatur durch das günstige Reibmoment insbesondere der bauartbedingte sehr ruhige Lauf von Vorteil, da Anschlußteile weniger Schwingungen ausgesetzt sind und dadurch einem geringeren Verschleiß unterliegen.

Aus Anspruch 2 geht hervor, daß die Käfige im Stegbereich axiale Schmiermitteldurchtrittsbohrungen aufweisen, die mit radialen Schmiermitteldurchtrittsbohrungen verbunden sind, die am inneren oder am äußeren Durchmesser des Käfigs enden.

Nach Anspruch 3 können die axialen Schmiermitteldurchtrittsbohrungen in ihrem Durchmesser veränderbar sein.

Für den Abtransport der Wärme im Lager bei Ölschmierung müssen Wälzlager möglichst große freie axiale Flächen aufweisen. Nur so kann ein möglichst großer Ölvolumenstrom das Lager gleichmäßig durchströmen. Beim vollrolligen Wälzlager ist die freie Fläche zwischen zwei benachbarten Wälzkörpern und den Borden relativ gering. Beim konventionellen Massivkäfiglager ist dieser freie Querschnitt u. U. durch die Begrenzung außengeführter Käfig, Innenringbord und zweier benachbarter Wälzkörper noch geringer als bei vollrolligen Lagern. Das optimal axial offene Scheibenkäfiglager hingegen bildet auch hier die große Ausnahme der besten Öldurchflußmöglichkeit, welche durch die axialen und die radialen Bohrungen im Scheibenkäfig noch unterstützt wird. Der veränderbare Durchmesser der axialen Schmiermitteldurchtrittsbohrungen erlaubt eine bestimmte Pump- bzw. Sogwirkung in eine gewünschte Richtung.

Nach weiteren Merkmalen der Erfindung gemäß den Ansprüchen 4 und 5 soll der Käfig aus Metall bzw. aus einer Metallegierung, beispielsweise aus Stahl oder aus Messing bestehen und durch Austanzen gefertigt sein. Eine andere Ausführungsvariante ist ein Käfig aus Kunststoff, der durch Spritzgießen hergestellt ist.

Eine spezielle Ausführungsform eines Radsatzlagers geht aus Anspruch 6 hervor. Danach ist der äußere Laufring aus zwei aneinanderliegenden mit Außenborden versehenen Laufringen gebildet, so daß ein Mittelbord entsteht, beide Laufringe gesprengt sind und je eine Ringnut zur Aufnahme des Scheibenkäfigs aufweisen, wobei der innere Laufring durch zwei aneinanderliegende mit je einem Außenbord versehene innere Laufringe gebildet ist.

Eine besonders vorteilhafte Ausführungsform geht aus Anspruch 7 hervor. Danach ist der äußere Laufring dreiteilig derart ausgebildet, daß ein mit dem Mittelbord versehenes zentrales Ringteil über die Halteelemente beidseitig mit je einem einen Außenbord aufweisenden äußeren Laufringteil verbunden ist, wobei zwischen zentralem Ringteil und äußerem Laufringteil je eine Ringnut zur Aufnahme der Scheibenkäfige gebildet ist. Nach einem weiteren zusätzlichen Merkmal gemäß Anspruch 8 weist der innere Laufring zwei Außenborde auf, wobei ein Bord durch eine separate Anlaufscheibe gebildet ist.

Schließlich sind in den Ansprüchen 9 und 10 das Radsatzlager vor Korrosion schützende Maßnahmen beschrieben. Danach sollen zumindest die Laufbahnen mit einer Korrosionsschutzbeschichtung aus einer galvanischen Zink-Legierung versehen sein, wobei die Korrosionsschutzbeschichtung eine Schichtdicke aufweist, die mit 0,1 bis 3 µm in der Größenordnung der Oberflächenrauhigkeit des Radsatzlagers liegt. Diese Zink-Legierung kann beispielsweise eine Zink-Eisen- oder eine Zink-Nickel-Legierung sein, welche außerdem noch mit einer Chromatierung versehen ist.

Diese extrem dünne, galvanisch aufgebrachte Schicht schützt über lange Zeit dieses Radsatzlager und auch mögliche Dichtungslaufflächen vor Korrosion. Durch diese katodische Schutzwirkung bleiben auch kleinere blanke Stellen rostgeschützt. Durch den Rostschutz wird eine deutliche Steigerung der Gebrauchsdauer der Radsatzlagerung im Vergleich mit unbeschichteten Radsatzlagern erreicht. Durch die Schichtdicken im Bereich der Größenordnung der Obeflächenrauhigkeit der Lagerteile wird erreicht, daß sich bei Inbetriebnahme der Radsatzlagerung die galvanische Schicht völlig in das Rauhigkeitsprofil der Oberfläche einarbeitet und damit keinen negativen Einfluß auf die radiale Lagerluft ausüben kann. Durch den feinsten Abrieb der Rauhigkeitstiefe der Lagerlaufbahnen werden Schichtpartikel eingewalzt, die den Rostschutz der Laufbahn und somit des Wälzlagers wesentlich verbessern und eine Art Notlauf bzw. Trockenschmierung darstellen.

Die Erfindung wird an nachstehenden Ausführungsbeispielen näher erläutert.

### Kurze Beschreibung der Zeichnungen

Es zeigen:
- Figuren 1 und 2: einen teilweisen Längsschnitt durch ein erfindungsgemäßes Radsatzlager,
- Figur 3: einen vergrößerten Ausschnitt aus einem Querschnitt durch ein Radsatzlager im Bereich eines Scheibenkäfigs,
- Figur 4: einen teilweisen Längsschnitt durch ein erfindungsgemäßes Radsatzlager mit Anschlußkonstruktion.

### Ausführliche Beschreibung der Zeichnungen

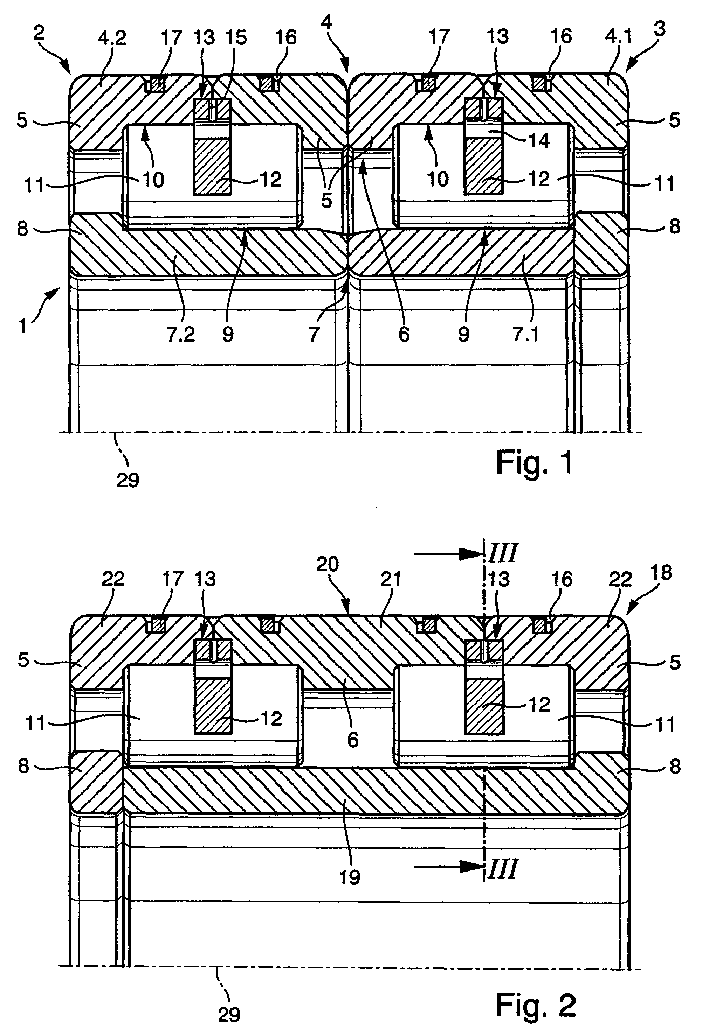

Das in Figur 1 gezeigte und mit 1 bezeichnete Radsatzlager besteht aus zwei nebeneinander angeordneten Zylinderrollenlagern 2 und 3. Beide Zylinderrollenlager 2 und 3 weisen einen äußeren Laufring 4.2 und 4.1 auf, der beidseitig zwei radial nach innen gerichtete Borde 5 besitzt. Der zusammengesetzte äußere Laufring des Radsatzlagers ist mit dem Bezugszeichen 4 versehen. Durch das Anliegen zweier benachbarter Borde 5 beider äußeren Laufringe 4.2 und 4.1 ist ein Mittelbord 6 des Radsatzlagers 1 gebildet. Sowohl das Zylinderrollenlager 2 als auch das Zylinderrollenlager 3 weisen je einen inneren Laufring 7.2 und 7.1 auf, die mit ihren Stirnflächen aneinander anliegen, so daß ein zusammengesetzter innerer Laufring 7 des Radsatzlagers 1 gebildet ist. An ihren äußeren Stirnseiten weisen beide innere Laufringe 7.2 und 7.1 einen radial nach außen gerichteten Bord 8 auf, der rechtsseitig als eine separate Anlaufscheibe ausgebildet ist. Auf zugehörigen Laufbahnen 9 und 10 des inneren Laufringes 7 und des äußeren Laufringes 4 wälzen Zylinderrollen 11 ab, die an ihrer Wälzfläche teilweise von einem Scheibenkäfig 12 umfaßt sind. Diese Scheibenkäfige 12 sind frei drehbar in einer Nut 13 der gesprengten äußeren Laufringe 4.2 und 4.1 geführt und besitzen axiale und radiale Schmiermitteldurchtrittsbohrungen 14 und 15. Die vier Laufringhälften der äußeren Laufringes 4 weisen eine Nut 16 auf und sind durch ein in diese eingeschnapptes Halteelement 17 miteinander verbunden. Der äußere Laufring 4 des Radsatzlagers 1 sind in nicht dargestellter Weise in einem Gehäuse untergebracht, während der innere Laufring 7 über eine ebenfalls nicht dargestellte Welle mit einem nicht gezeigten Schienenrad verbunden ist. Die Abdichtung der Radsatzlagerung 1, die hier ebenfalls nicht dargestellt ist, kann in verschiedenster Weise, beispielsweise durch eine Labyrinthdichtung oder auch durch eine schleifende Dichtung erfolgen.

Das in Figur 2 mit 18 bezeichnete Radsatzlager weist ebenfalls zwei nebeneinander angeordnete in einem Scheibenkäfig 12 geführte Zylinderrollen 11 auf. Der innere Laufring 19 ist, abgesehen vom linksseitigen Bord 8 in Form einer Anlaufscheibe, einstückig ausgebildet. Der äußere Laufring 20 ist dreiteilig ausgebildet, wobei ein zentrales Ringteil 21 mit dem radial nach innen weisenden Mittelbord 6 beidseitig mit je einem einen Außenbord 5 aufweisenden äußeren Laufringteil 22 verbunden ist. In der bereits beschriebenen Weise ist in den Trennebenen zwischen zentralem Ringteil 21 und den beiden äußeren Laufringteilen 22 eine Ringnut 13 vorhanden, in der wiederum je ein Scheibenkäfig 12 frei drehbar geführt ist. Die Ringteile 21, 22 sind wiederum über Nuten 16 und Halteelemente 17 miteinander verbunden.

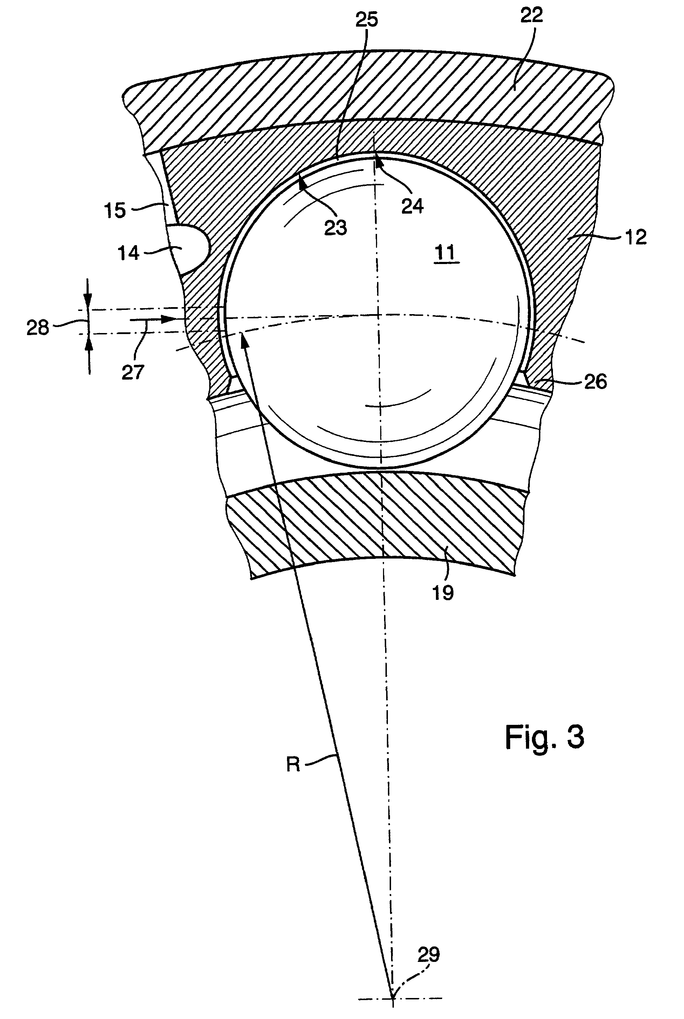

Der in Figur 3 gezeigte, in der Nut 13 des zentralen Ringteiles 21 und des äußeren Laufringteiles 22 geführte Scheibenkäfig 12 weist Stege 26 auf, die die einzelnen Zylinderrollen 11 voneinander trennen und bis über den Teilkreisradius R in Richtung Lagermittelpunkt 29, d. h. in Richtung der Drehachse, hineinreichen. Die Taschen 23 des Scheibenkäfigs 12 sind so gestaltet, daß ihr Krümmungsradius oberhalb und unterhalb des Teilkreises R nur geringfügig größer als der Radius der Zylinderrollen 11 ist. Anschließend nimmt der Krümmungsradius der Taschen 23 stetig bis zu deren Scheitelpunkt 24 zu, so daß in radialer Richtung zwischen Tasche 23 und Mantelfläche der Zylinderrolle 11 ein keilförmiger Spalt 25 gebildet ist. Dieser Spalt 25 bewirkt einen genau definierten Kraftangriff 27 bzw. bewirkt eine Kraftangriffszone 28, die sich positiv auf das Laufverhalten das Radsatzlagers 18 auswirken. Im Stegbereich 26 schließlich ist der Scheibenkäfig 12 mit axialen Schmiermitteldurchtrittsbohrungen 14 versehen, die mit radialen Schmiermitteldurchtrittsbohrungen 15 verbunden sind.

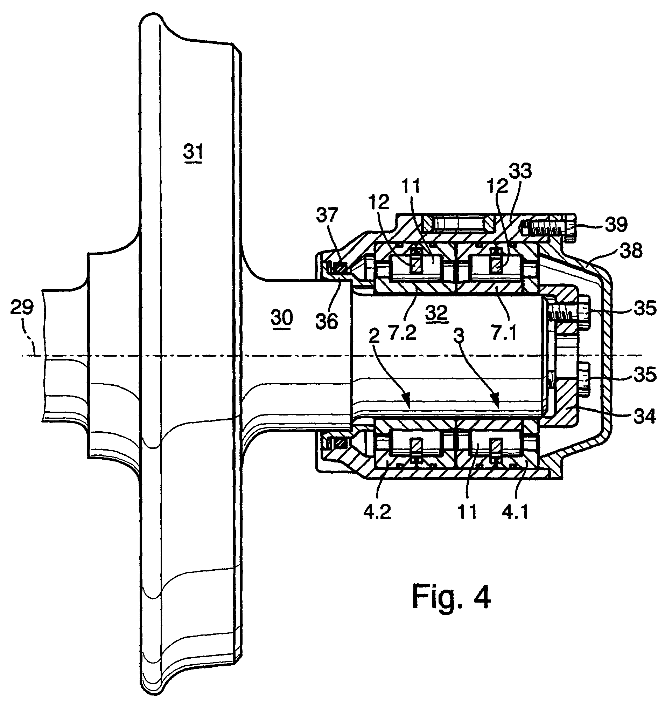

In Figur 4 schließlich ist das in Figur 1 dargestellte Radsatzlager 1 in einer Anschlußkonstruktion gezeigt. Auf der Radsatzwelle 30 ist das Schienenrad 31 aufgeschrumpft oder auf andere Weise fest mit dieser verbunden. Der Wellenabsatz 32 der Radsatzwelle 30 ist von den inneren Laufringen 7.1 und 7.2 der Zylinderrollenlager 3 und 2 aufgenommen, während deren äußere Laufringe 4.1 und 4.2 vom Gehäuse 33 aufgenommen sind. Zwischen den Laufringen 7.1, 7.2, 4.1, 4.2 wälzen durch die Scheibenkäfige 12 voneinander getrennte Zylinderrollen 11 ab. Am Wellenabsatz 32 ist die Druckscheibe 34 angeordnet, die beim Anziehen der Befestigungsschrauben 35 die beiden Zylinderrollenlager 3 und 2 bis zum Anschlag an den Anlaufring 36 nach links verschiebt. Während linksseitig zur Abdichtung des Radsatzlagers 1 zwischen Gehäuse 33 und Anlaufring 36 der Dichtring 37 angeordnet ist, ist es rechtsseitig durch den Deckel 38 geschützt, der mit Befestigungsschrauben 39 am Gehäuse 33 gehalten ist.

### Bezugszeichen

- 1: Radsatzlager
- 2: Zylinderrollenlager
- 3: Zylinderrollenlager
- 4: äußerer Laufring
- 4.1: äußerer Laufring
- 4.2: äußerer Laufring
- 5: Bord
- 6: Mittelbord
- 7: innerer Laufring
- 7.1: innerer Laufring
- 7.2: innerer Laufring
- 8: Bord
- 9: Laufbahn
- 10: Laufbahn
- 11: Zylinderrolle
- 12: Scheibenkäfig
- 13: Ringnut
- 14: axiale Schmiermitteldurchtrittsbohrung
- 15: radiale Schmiermitteldurchtrittsbohrung
- 16: Nut
- 17: Halteelement
- 18: Radsatzlager
- 19: innerer Laufring
- 20: äußerer Laufring
- 21: zentrales Ringteil
- 22: äußeres Laufringteil
- 23: Tasche
- 24: Scheitelpunkt
- 25: Spalt
- 26: Steg
- 27: Kraftangriffspunkt
- 28: Kraftangriffszone
- 29: Drehachse
- 30: Radsatzwelle
- 31: Schienenrad
- 32: Wellenabsatz
- 33: Gehäuse
- 34: Druckscheibe
- 35: Befestigungsschraube
- 36: Anlaufring
- 37: Dichtring
- 38: Deckel
- 39: Befestigungsschraube
- R: Teilkreisradius

## Patentansprüche

1. Radsatzlager (1, 18) für Schienenfahrzeuge, bestehend aus zwei nebeneinander angeordneten in Käfigen geführten Zylinderrollen (11), die auf zugehörigen Laufbahnen (9, 10) eines inneren (7, 19) und eines äußeren Laufringes (4, 20) abwälzen, wobei das Radsatz-lager (1, 18) einen Mittelbord (6) und Außenborde aufweist, **dadurch gekennzeichnet, daß** die Käfige als einstückige Scheibenkäfige (12) ausgebildet sind, die in einer Ringnut (13) des inneren (7, 19) oder des äußeren Laufringes (4, 20) frei drehbar geführt sind und an ihrem äußeren oder inneren Durchmesser mehrere, über den gesamten Umfang verteilt angeordnete, Zylinderrollen (11) aufnehmende Taschen (23) aufweisen, wobei der innere (7, 19) oder der äußere Laufring (4, 20) gesprengt ist und durch Halteelemente (17) nach dem Einsetzen der Käfige (12) zusammengehalten ist.

2. Radsatzlager (1, 18) nach Anspruch 1, **dadurch gekennzeichnet, daß** die Käfige (12) im Stegbereich (26) axiale Schmiermitteldurchtrittsbohrungen (14) aufweisen, die mit radialen Schmiermitteldurchtrittsbohrungen (15) verbunden sind, die am inneren oder äußeren Durchmesser des Käfigs (12) enden.

3. Radsatzlager (1, 18) nach Anspruch 2, **dadurch gekennzeichnet, daß** die axialen Schmiermitteldurchtrittsbohrungen (14) in ihrem Durchmesser zunehmen.

4. Radsatzlager (1, 18) nach Anspruch 1, **dadurch gekennzeichnet, daß** der Käfig (12) aus Metall oder aus einer Metallegierung, beispielsweise aus Stahl oder aus Messing besteht und durch Ausstanzen gefertigt ist.

5. Radsatzlager (1, 18) nach Anspruch 1, **dadurch gekennzeichnet, daß** der Käfig (12) aus Kunststoff besteht und durch Spritzgießen hergestellt ist.

6. Radsatzlager (1) nach Anspruch 1, **dadurch gekennzeichnet, daß** der äußere Laufring (4) aus zwei aneinanderliegenden mit Außenborden (5) versehenen Laufringen (4.1, 4.2) gebildet ist, so daß ein Mittelbord (6) entsteht, beide Laufringe (4.1, 4.2) gesprengt sind und je eine Ringnut (13) zur Aufnahme des Scheibenkäfigs (12) aufweisen und daß der innere Laufring (7) durch zwei aneinanderliegende mit je einem Außenbord (8) versehene innere Laufringe (7.1, 7.2) gebildet ist.

7. Radsatzlager (18) nach Anspruch 1, **dadurch gekennzeichnet, daß** der äußere Laufring (20) dreiteilig derart ausgebildet ist, daß ein mit dem Mittelbord (6) versehenes zentrales Ringteil (21) über die Halteelemente (17) beidseitig mit je einem einen Außenbord (5) aufweisenden äußeren Laufringteil (22) verbunden ist, wobei zwischen zentralem Ringteil (21) und äußerem Laufringteil (22) je eine Ringnut (13) zur Aufnahme der Scheibenkäfige (12) gebildet ist.

8. Radsatzlager (18) nach Anspruch 7, **dadurch gekennzeichnet, daß** der innere Laufring (19) zwei Außenborde (8) aufweist, wobei ein Bord (8) durch eine separate Anlaufscheibe gebildet ist.

9. Radsatzlager (1, 18) nach Anspruch 1, **dadurch gekennzeichnet, daß** zumindest die Laufbahnen (9, 10) mit einer Korrosionsschutzbeschichtung aus einer galvanischen Zink-Legierung versehen sind, wobei die Korrosionsschutzbeschichtung eine Schichtdicke aufweist, die mit 0,1 bis 3,0 µm in der Größenordnung der Oberflächenrauhigkeit des Wälzlagerbauteils liegt.

10. Radsatzlager (1, 18) nach Anspruch 9, **dadurch gekennzeichnet, daß** die galvanische Zink-Legierung eine Zink-Eisen- oder eine Zink-Nickel-Legierung ist und eine Chromatierung aufweist.

## Claims

1. Axlebox bearing (1, 18) for rail vehicles, said bearing consisting of two cylindrical rollers (11) arranged next to each other and guided in cages for rolling on associated raceways (9, 10) of an inner (7, 19) and an outer race ring (4, 20), said axlebox bearing (1, 18) comprising a centre flange (6) and outer flanges, **characterised in that** the cages are configured as one-piece disk cages (12) that are guided for free rotation in an annular groove (13) of the inner (7, 19) or the outer race ring (4, 20) and comprise a plurality of pockets (23) arranged in spaced relationship on the entire periphery on their outer or inner diameter for receiving cylindrical rollers (11), the inner (7, 19) or the outer ring (4, 20) is split and held together by retaining elements (17) after the insertion of the cages (12).

2. Axlebox bearing (1, 18) according to claim 1, **characterised in that**, in the region of the webs (26), the cages (12) comprise axial lubricant penetration bores (14) that communicate with radial lubricant penetration bores (15) that end on the inner or the outer diameter of the cage (12).

3. Axlebox bearing (1, 18) according to claim 2, **characterised in that** the axial lubricant penetration bores (14) increase in diameter.

4. Axlebox bearing (1, 18) according to claim 1, **characterised in that** the cage (12) is made of a metal or a metal alloy, for example, of steel or brass, and fabricated by punching.

5. Axlebox bearing (1, 18) according to claim 1, **characterised in that** the cage (12) is made of a plastic material and manufactured by injection moulding.

6. Axlebox bearing (1) according to claim 1, **characterised in that** the outer race ring (4) is made up of two adjoining race rings (4.1, 4.2) that are provided with outer flanges (5) so that a centre flange (6) is formed, both race rings (4.1, 4.2) are split and each comprises an annular groove (13) for receiving the disk cage (12), the inner race ring (7) being formed by two adjoining inner race rings (7.1, 7.2) each of which is provided with an outer flange (8).

7. Axlebox bearing (18) according to claim 1, **characterised in that** the outer race ring (20) has a tripartite configuration in which a central ring part (21) having a centre flange (6) is connected on each side by the retaining elements (17) to an outer race ring part (22) comprising an outer flange (5), and, between the central ring part (21) and each outer race ring part (22), an annular groove (13) is formed for receiving the disk cages (12).

8. Axlebox bearing (18) according to claim 7, **characterised in that** the inner race ring (19) comprises two outer flanges (8), one of these flanges (8) being constituted by a separate stop disk

9. Axlebox bearing (1, 18) according to claim 1, **characterised in that** at least the raceways (9, 10) are provided with an anti-corrosion coating of a galvanic zinc alloy, the anti-corrosion coating having a thickness that, with a value of 0.1 to 3.0 µm, is in the order of magnitude of the surface roughness of the rolling bearing component.

10. Axlebox bearing (1, 18) according to claim 9, **characterised in that** the galvanic zinc alloy is a zinc iron alloy or a zinc nickel alloy and is chromated.

## Revendications

1. Roulement (1, 18) de boîte d'essieu pour des véhicules sur rails, lequel roulement comprend deux rouleaux cylindriques (11) qui sont agencées, l'un à côté de l'autre, et guidés dans des cages, lesdits rouleaux cylindriques (11) roulant sur des pistes (9, 10) de roulement associées d'une bague intérieure (7, 19) et d'une bague extérieure (4, 20) de roulement, ledit roulement (1, 18) de boîte d'essieu comprenant un bord central (6) et des bords extérieurs, **caractérisé en ce que** les cages sont configurées sous la forme de cages à disque (12) en une seule pièce et sont guidées en rotation libre dans une rainure annulaire (13) de la bague intérieure (7, 19) ou de la bague extérieure (4, 20) de roulement et comprennent, réparties le long de leur périphérie entière, sur leur diamètre extérieur ou intérieur, des poches (23) pour recevoir des rouleaux cylindriques (11), la bague intérieure (7, 19) ou la bague extérieure (4, 20) de roulement étant fendue et retenue ensemble, après l'insertion des cages (12), par des éléments de retenue (17).

2. Roulement (1, 18) de boîte d'essieu selon la revendication 1, **caractérisé en ce que** les cages (12) comprennent, dans la région des entretoises (26), des alésages axiaux (14) de passage de lubrifiant qui communiquent avec des alésages radiaux (15) de passage de lubrifiant qui s'étendent jusqu'au diamètre intérieur ou extérieur de la cage (12).

3. Roulement (1, 18) de boîte d'essieu selon la revendication 2, **caractérisé en ce que** les alésages axiaux (14) de passage de lubrifiant ont un diamètre variable.

4. Roulement (1, 18) de boîte d'essieu selon la revendication 1, **caractérisé en ce que** la cage (12) est faite en métal ou en un alliage métallique, par exemple, en acier ou en laiton, et elle est fabriquée par découpage.

5. Roulement (1, 18) de boîte d'essieu selon la revendication 1, **caractérisé en ce que** la cage (12) est faite en une matière plastique et fabriquée par coulage par injection.

6. Roulement (1) de boîte d'essieu selon la revendication 1, **caractérisé en ce que** la bague extérieure (4) de roulement est formée par deux bagues (4 1, 4 2) de roulement jointives qui comprennent des bords extérieurs (5), de sorte qu'il se forme un bord central (6), les deux bagues (4.1, 4.2) de roulement sont fendues et chacune comprend une rainure annulaire (13) pour recevoir la cage à disque (12), la bague intérieure (7) de roulement étant formée par deux bagues intérieures (7.1, 7.2) de roulement jointives ayant, chacune, un bord extérieur (8).

7. Roulement (18) de boîte d'essieu selon la revendication 1, **caractérisé en ce que** la bague extérieure (20) de roulement est configurée de telle manière en trois parties qu'une partie centrale (21) de la bague qui comprend le bord central (6) est reliée de chaque côté par un élément de retenue (17) à une partie extérieure (22) de la bague de roulement qui comprend un bord extérieur (5), et entre la partie centrale (21) de la bague et chaque partie extérieure (22) de la bague de roulement est formée une rainure annulaire (13) pour recevoir les cages à disque (12).

8. Roulement (18) de boîte d'essieu selon la revendication 7, **caractérisé en ce que** la bague intérieure (19) de roulement comprend deux bords extérieurs (8) dont l'un (8) est formé par un disque séparé d'arrêt.

9. Roulement (1, 18) de boîte d'essieu selon la revendication 1, **caractérisé en ce que,** au moins les pistes (9, 10) de roulement sont munies d'une couche anti-corrosive en un alliage galvanique de zinc, la couche anti-corrosive ayant une épaisseur qui, avec une valeur de 0,1 à 3,0 µm, est de l'ordre de grandeur de la rugosité superficielle du composant du roulement.

10. Roulement (1, 18) de boîte d'essieu selon la revendication 9, **caractérisé en ce que** l'alliage galvanique de zinc est un alliage zinc-fer ou un alliage zinc-nickel et est muni d'une chromatation.
